**Europäisches Patentamt**

**European Patent Office**

**Office européen des brevets**

(19)

(11) Veröffentlichungsnummer: **0 123 899**
**A1**

(12) # EUROPÄISCHE PATENTANMELDUNG

(21) Anmeldenummer: **84103350.9**

(22) Anmeldetag: **27.03.84**

(51) Int. Cl.³: **B 23 D 47/04**

(30) Priorität: **31.03.83 DE 3312384**

(43) Veröffentlichungstag der Anmeldung: **07.11.84**
**Patentblatt 84/45**

(84) Benannte Vertragsstaaten: **DE FR GB IT**

(71) Anmelder: **TREMAG Trennmaschinen-Gesellschaft mbH, Am Alten Schacht 8, D-4100 Duisburg 17 (DE)**

(72) Erfinder: **Ehm, Karl Horst, Dipl.-Ing., Am Alten Schacht 8, D-4100 Duisburg 17 (DE)**
Erfinder: **Orendi, Roderich Rolf, Heitorfer Mark 15, D-4000 Düsseldorf 31 (DE)**

(74) Vertreter: **Bonsmann, Manfred, Dipl.-Ing., Kaldenkirchener Strasse 35a, D-4050 Mönchengladbach 1 (DE)**

(54) **Verfahren zum Spannen von einzeln oder in Lagen auf einer Spannauflage aufliegenden Rohren od. dgl. sowie Vorrichtung zur Durchführung dieses Verfahrens.**

(57) Es wird ein Verfahren zum Spannen von einzeln oder in Lagen auf einer Spannauflage aufliegenden Rohren od. dgl. zwecks Abtrennen von Abschnitten mittels einer Trenneinrichtung beschrieben. Es werden abwechselnd horizontale und vertikale Kräfte in einer solchen Weise auf die Rohre aufgebracht, daß die erzielten Spannkräfte höher als bei lediglich horizontal wirkenden Spannkräften sind, andererseits jedoch eine bleibende Verformung der Rohre verhindert wird. Weiterhin wird eine zur Durchführung des Verfahrens geeignete Vorrichtung beschrieben. Das Verfahren bzw. die Vorrichtung eignet sich dazu, so zu spannen, daß der Trennvorgang mit technologisch optimalen Zerspannungskräften erfolgen kann.

Verfahren zum Spannen von einzeln oder in Lagen auf einer
Spannauflage aufliegenden Rohren od. dgl. sowie Vorrichtung zur Durchführung dieses Verfahrens

Die Erfindung betrifft ein Verfahren zum Spannen von einzeln oder in Lagen auf einer Spannauflage aufliegenden
Rohren od. dgl. zwecks Abtrennen von Abschnitten mittels
einer Trenneinrichtung, bei dem in Richtung der Lagerebene auf gegenüberliegenden Seiten Spannkräfte von maximal
solcher Größe ($P_{h1}$zul.) aufgebracht werden, daß die Rohre
bei Einwirkung nur dieser Kräfte keine unzulässige bleibende Verformung erfahren, und die Rohre durch quer zur Richtung der Lagerebene auf gegenüberliegenden Seiten auf die
Rohre wirkende Niederhaltekräfte gegen ein Übereinanderschieben gesichert werden, sowie eine Vorrichtung zur
Durchführung dieses Verfahrens.

Bekannte, nach diesem Verfahren arbeitende Spannvorrichtungen, weisen in Richtung der Lagerebene relativ zueinander
verschiebbare Spannbacken sowie einen quer (vertikal) zur
Richtung der Lagerebene bewegbaren Spannbacken auf. Die
Spannkräfte werden hauptsächlich durch die in Richtung der
Lagerebene wirkenden Spannbacken aufgebracht. Die vertikale
Spannbacke übernimmt lediglich eine Hilfsfunktion und wirkt
im wesentlichen als "Niederhalter" für die Rohre, um ein
Übereinanderschieben bei einem Aufbringen relativ großer
Kräfte in der Lagerebene zu verhindern und diese dadurch
einigermaßen sicher spannen zu können.

Mit dem bekannten Verfahren kann ein Verdrehen der Rohre während des Trennvorgangs (beispielsweise Sägevorgangs), in vielen Fällen, insbesondere bei hohen Zerspankräften, nicht sicher verhindert werden. Ein Verdrehen während des Trennvorganges kann eine Zerstörung der Trennwerkzeuge und Qualitätseinbußen an den Schnittflächen zur Folge haben. Eine Abhilfe durch Erhöhung der Spannkräfte ist jedoch nicht möglich, da nach dem Spannvorgang keine bleibenden Verformungen der Rohre od. dgl. im Spannbereich zurückbleiben dürfen. Dies hat zur Folge, daß die Trenneinrichtungen meist mit erheblich geringerer Leistung als technologisch möglich arbeiten, da die durch die Zerspankräfte auf die Rohre einwirkenden Verdrehmomente stets kleiner als die durch die vorhandenen Spannkräfte zulässigen Drehmomente sein müssen.

Es sind Spannvorrichtungen bekannt geworden, bei denen die vertikalen Spannbacken für jedes zu spannende Rohr eine entsprechend angepaßte prismatische Vertiefung aufweisen. Bei derartigen Vorrichtungen können zwar in vertikaler Richtung höhere Spannkräfte aufgebracht werden. Nachteilig ist jedoch, daß für unterschiedliche Rohrdurchmesser besondere Spannbacken benötigt werden, und daß bei dem Einfahren der Rohrlage in den Maschinenspannbereich beträchtliche Probleme entstehen.

Es sind weiterhin Spannsysteme vorgeschlagen worden, bei denen in dem vertikalen Spannbacken kleine Zylinder angeordnet sind, durch deren Wirkung jedes Rohr od. dgl. einzeln gespannt werden kann. Hierbei ist von Nachteil, daß die räumliche Verteilung der Zylinder in dem Spannbacken schwierig ist, wenn Rohre mit unterschiedlichen Durchmessern gespannt werden sollen.

Der Erfindung liegt die Aufgabe zugrunde, ein Spannverfahren der eingangs genannten Art nebst einer zur Durchführung des Verfahrens geeigneten Vorrichtung zu schaffen, welches bzw. welche es ermöglicht, in möglichst einfacher Form mit hohen Spannkräften eine sichere Einspannung der Rohre ohne bleibende Deformationen zu erreichen und dadurch eine Verdrehung während des Trennvorganges bei wesentlich höheren

0123899

Trenn- bzw. Zerspanungskräften als bisher möglich zu verhindern.

Diese Aufgabe wird erfindungsgemäß dadurch gelöst, daß

a) während des Aufbringens oder vor dem Aufbringen der in der Lagerebene wirkenden Spannkräfte von maximal der Größe $P_{h1}$zul. quer zur Richtung der Lagerebene wirkende Kräfte von lediglich solcher Größe aufgebracht werden, daß die Sicherung gegen ein Übereinanderschieben ohne Erhöhung bzw. merkbare Erhöhung der Auflagekräfte der Rohre auf der Spannauflage erfolgt,

und daß

b) anschließend quer zur Richtung der Lagerebene wirkende Spannkräfte von der Größe $n \cdot P_{h1}$zul. auf die Rohre aufgebracht werden, wobei n die Anzahl der Rohre in der Lage ist,

und daß

c) anschließend gleichzeitig die in Richtung der Lagerebene und die quer zur Richtung der Lagerebene wirkenden Spannkräfte pro Rohr auf höchstens $P_{h2}$zul. erhöht werden - somit in Richtung der Lagerebene auf $P_{h2}$zul. und quer zur Richtung der Lagerebene auf $n \cdot P_{h2}$zul. -, wobei $P_{h2}$zul. die Kraft ist, bei der die Rohre bei Einwirkung von gleichzeitig in der Lagerebene und quer zur Lagerebene gegenüberliegend einwirkenden Kräften keine unzulässige bleibende Verformung erfahren.

Die Erfindung nutzt den Umstand aus, daß die lediglich eine Verformung im elastischen Bereich bewirkenden und damit für einen Spannvorgang zulässigen Spannkräfte dann erheblich höher sind, wenn diese Kräfte - bezogen auf den Umfang - an vier einander gegenüberliegenden Stellen einwirken, also in Richtung der Lagerebene und quer zur Richtung der Lagerebene. Diese - mit $P_{h2}$zul. bezeichnete Kraft - ist in ihrem Betrag größer als die Kraft der Größe $P_{h1}$zul., welche die Kraft ist, bei der die Rohre bei Einwirkung nur dieser Kräfte keine unzulässige bleibende Verformung erfahren. Darüber hinaus wirken diese höheren Kräfte an vier Umfangsbereichen der zu spannenden Rohre ein, was zu einer wesentlich höheren Gesamtspannkraft als bei dem bekannten Spannverfahren führt, bei dem die wesentlichen Spannkräfte der Größe $P_{h1}$zul. lediglich auf zwei gegenüberliegenden Umfangsbereichen einwirken, während die quer zu diesen Kräften auf gegenüberliegenden Seiten einwirkenden Niederhaltekräfte von lediglich untergeordneter Bedeutung sind.

Die bei dem bekannten Spannverfahren in vertikaler Richtung auf die Rohre aufgebrachten Niederhaltekräfte verhindern, daß sich bei einer Lage von Rohren die endseitig in Richtung der Lagerebene auf die jeweils außenliegenden Rohre aufgebrachten Spannkräfte gleichmäßig auch auf die im Inneren der Lage liegenden Rohre verteilen. Die in Richtung der Lagerebene aufgebrachten Spannkräfte werden vielmehr durch die infolge der Deformation der außenliegenden Rohre auftretenden Reibungskräfte zwischen der Spannauflage und dem vertikalen Spannbakken aufgenommen, mit dem Ergebnis, daß die Kräfte zwischen den sich - theoretisch - linienförmig berührenden Rohren in der Lage mit zunehmender Entfernung von dem Außenrohr geringer werden. Dies führt dann bei dem bekannten Verfahren dazu, daß lediglich auf die außenliegenden Rohre die Kraft $P_{h1}$zul. einwirkt, dagegen auf die innenliegenden Rohre Spannkräfte von lediglich geringerer Größe.

Gemäß dem Merkmal a) der Erfindung wird dieser geschilderte Nachteil dadurch verhindert, daß zunächst quer zur Richtung der Lagerebene wirkende Kräfte von lediglich solcher Größe aufgebracht werden, daß die Sicherung gegen ein Übereinanderschieben ohne Erhöhung bzw. merkbare Erhöhung der Auflagekräfte der Rohre auf der Spannauflage erfolgt. Dadurch wird bei Aufbringen der Spannkraft $P_{h1}$zul. in Richtung der Lagerebene erreicht, daß diese Kraft auf alle Rohre der Lage gleichmäßig einwirkt. Anschließend daran wird entsprechend dem Merkmal b) auch quer zu der Lagerebene auf gegenüberliegenden Seiten auf jedes Rohr die Kraft $P_{h1}$zul. aufgebracht. Da in der quer zur Lagerebene liegenden Richtung die Rohre parallel und nicht - wie in der Lagerebene - hintereinander angeordnet sind, erfordert dies das Aufbringen von Spannkräften der Größe n · $P_{h1}$zul. durch einen gemeinsamen Spannbalken.

Die nunmehr an vier Stellen einwirkenden Spannkräfte pro Rohr werden dann entsprechend dem Merkmal c) weiter erhöht, und zwar auf höchstens den Wert $P_{h2}$zul. pro Rohr. Da die Rohre in Richtung der Lagerebene "hintereinandergeschaltet" sind, ist hierzu in dieser Richtung die Erhöhung der Kräfte auf $P_{h2}$zul. erforderlich, während quer dazu entsprechend den in dieser Richtung "parallelgeschalteten" Rohren die Erhöhung auf n · $P_{h2}$zul. erfolgt.

Anhand eines Zahlenbeispiels seien die vorstehenden Ausführungen verdeutlicht. Bei einer Anzahl von n = 46, also 46 Rohren pro Lage, wurde bei in der Praxis vorkommenden Rohrabmessungen und Materialien ein Wert von $P_{h1}$zul. von 484 kp ermittelt. Zur Kompensation der durch die Zerspankräfte der eingesetzten Trenneinrichtung entstehenden Kräfte wären jedoch bei einer Spannung in lediglich einer Richtung (horizontaler Spannung) Spannkräfte in Höhe von 669 kp erforderlich. Da diese Spannkräfte mit dem herkömmlichen Spannverfahren keinesfalls erreicht werden können, müssen die Zerspankräfte so verringert werden, daß diese geringer sind als der Wert $P_{h1}$zul..

Demgegenüber ist es mit dem erfindungsgemäßen Verfahren möglich, die Spannkräfte aus $P_{h2}$zul. (in Richtung der Lagerebene) und n · $P_{h2}$zul. (quer zur Richtung der Lagerebene) zu steigern. Die Werte betragen im vorliegenden Fall 998 kp bzw. 45900 kp, während die benötigten Spannkräfte bei Erzielung der maximal möglichen Trennleistung im vorliegenden Fall in Richtung der Lagerebene 335 kp ($P_{h2}$) bzw. quer zur Richtung der Lagerebene 15410 kp (n · $P_{h2}$) betragen. Daraus ist ersichtlich, daß die mittels des erfindungsgemäßen Verfahrens erzielbaren zulässigen Spannkräfte erheblich höher als die erforderlichen Spannkräfte sind. In diesem Fall ist es daher nicht einmal erforderlich, bei dem Verfahrensschritt c) die maximalen Werte zu erreichen, sondern es reicht aus, wenn die in Richtung der Lagerebene und die quer zur Richtung der Lagerebene wirkenden Spannkräfte pro Rohr auf den Wert $P_{h2}$ bzw. n · $P_{h2}$ erhöht werden, um den Trennvorgang mit der maximalen Zerspanungsleistung durchführen zu können.

Die Ermittlung der erforderlichen Spannkräfte erfolgt in für den Fachmann bekannter Weise durch Ermittlung des Zerspanmomentes der Trenneinrichtung unter Berücksichtigung der jeweils auftretenden größten Zerspanlänge, des Radius des Rohres, des Außendurchmessers der Trenneinrichtung und der Zahnteilung (bei einem Sägeblatt). Daraus kann unter Berücksichtigung der Breite der Trenneinrichtung und der spezifischen Zerspanungskräfte die Tangentialkraft berechnet und das Zerspanmoment bestimmt werden. Die Einspannkräfte müssen nun so dimensioniert sein, daß sie ihrerseits Reibungskräfte und damit ein Reibungsmoment erzeugen, die ein größeres Drehmoment zulassen. Die Werte $P_{h1}$zul. und $P_{h2}$zul. hängen von den individuellen Eigenschaften der Rohre ab, können jedoch ebenfalls ohne weiteres bestimmt werden.

Mit dem erfindungsgemäßen Verfahren ist es möglich, so zu spannen, daß trotz Ausschöpfung der technologisch möglichen maximalen Schnittkräfte sich die eingespannten Rohre od. dgl. während des Trenn- bzw. Sägevorgangs nicht verdrehen und keine bleibenden Verformungen zurückbleiben, unabhängig davon, ob ein einzelnes Rohr oder eine ganze Lage gespannt wird, und ob der Säge- oder Trennschnitt am Anfang, am Ende oder an einer dazwischenliegenden Stelle erfolgt.

Eine Vorrichtung zur Durchführung des erfindungsgemäßen Verfahrens, die eine oberhalb einer Spannauflage angeordnete horizontale Spanneinrichtung und einen vertikal verschiebbaren,

0123899

sich über die Breite der Lage erstreckenden Spannbalken
aufweist, ist dadurch gekennzeichnet, daß die horizontale
Spanneinrichtung und der vertikale Spannbalken Meßeinrichtungen zur Messung der während des Spannvorganges entstehenden geometrischen Verformungen der Rohre aufweisen, und die
Meßeinrichtungen bei Erreichung bzw. Überschreitung der zulässigen Verformungen ein das Ende des betreffenden Spannvorganges auslösendes Signal abgeben. Damit kann erreicht werden, daß die Vorrichtung über die Messung der jeweils zulässigen (elastischen) Verformung die Spannkräfte selbsttätig
einstellt.

Nach einem weiteren Merkmal der Erfindung kann vorgesehen
sein, daß die Spanneinrichtungen Rücklaufsperreinrichtungen
aufweisen. Damit wird erreicht, daß bei Durchführung der einzelnen Verfahrensschritte zur Erzielung der gewünschten Spannung die einmal erreichten Kräfte erhalten bleiben.

Nach einem weiteren Merkmal der Erfindung kann vorgesehen
sein, daß in einer Spanneinrichtung mehrere Spannvorrichtungen vorgesehen sind. Der Einsatz mehrerer Spannvorrichtungen
bietet sich dann an, wenn festgestellt werden sollte, daß die
entsprechend dem erfindungsgemäßen Verfahren erzielbaren zulässigen Spannkräfte geringer sind, als die für den Trennvorgang benötigten Spannkräfte. In diesem Fall können die erreichbaren Spannkräfte durch den Einsatz einer weiteren Spannvorrichtung vergrößert werden, beispielsweise dadurch, daß gegenüberliegend auf beiden Seiten der Trenneinrichtung Spannvorrichtungen angeordnet sind, welche entsprechend der Erfindung ausgebildet sind und den Spannvorgang entsprechend dem
erfindungsgemäßen Verfahren durchführen.

In weiterer Ausgestaltung der Erfindung kann vorgesehen sein,
daß dem Spannbalken eine Kontakteinrichtung zugeordnet ist,
durch deren Wirkung die Vorschubbewegung des Spannbalkens bei
Erreichung bzw. Überschreitung eines bestimmten Wertes abstellbar ist.

In weiterer Ausgestaltung der Erfindung kann vorgesehen
sein, daß nach dem Abschalten einer Vorschubbewegung des
Spannbalkens die zugehörige Meßeinrichtung bei Erreichung
eines geringen Anpreßdruckes des Spannbalkens auf die Rohre
auf Null gesetzt bzw. der dann vorhandene Meßwert in der
Meßeinrichtung verrechenbar als Konstante gespeichert wird.

Weiterhin kann erfindungsgemäß vorgesehen sein, daß der Vorrichtung eine zur Messung bzw. Aufnahme vorgegebener Daten
der zu spannenden Rohre ausgebildete weitere Meß- und Recheneinrichtung zugeordnet ist, und daß eine Wegmeßeinrichtung
zum Zwecke der Ermittlung der Rohranzahl vorgesehen ist.

Die erfindungsgemäße Vorrichtung ermöglicht es, daß die
Spannvorrichtung nach Eingabe produktspezifischer Daten
selbsttätig den Spannvorgang durchführt und feststellt, ob
die zugeordnete Trenneinrichtung mit der technisch maximal
möglichen Zerspankraft arbeiten kann.

Es sei noch darauf hingewiesen, daß die selbstverständlich
auftretenden Gewichtskräfte bei der Erläuterung des erfindungsgemäßen Verfahrens nicht erwähnt worden sind. In vielen Fällen sind die den Spannkräften in Richtung der Lagerebene entgegenwirkenden, durch die Gewichtskräfte bedingten
Reibungskräfte gegenüber den Spannkräften vernachlässigbar
klein.

Die Erfindung wird nachfolgend anhand der Zeichnungen näher
erläutert. Es zeigen:

Fig. 1   eine schematische Schnittdarstellung einer Spannauflage mit in einer Lageebene aufliegenden Rohren
         vor dem Spannvorgang;

Fig. 2   eine Darstellung entsprechend Fig. 1 mit der Sicherung gegen ein Übereinanderschieben der Rohre;

Fig. 3   das Aufbringen von Spannkräften in der Lagerebene

0123899

so, daß die Rohre gegeneinander anliegen;

Fig. 4 eine Darstellung entsprechend Fig. 3, wobei in der
Lagerebene solche Kräfte aufgebracht werden, daß
die Rohre keine unzulässige bleibende Verformung
erfahren;

Fig. 5 eine Darstellung entsprechend Fig. 4, wobei jedoch
die quer zur Lagerebene wirkenden Kräfte pro Rohr
auf $P_{h1}$zul. bzw. insgesamt auf $n \cdot P_{h1}$zul. gesteigert sind;

Fig. 6 eine Darstellung entsprechend Fig. 5, wobei die
Kräfte pro Rohr sowohl in Richtung der Lagerebene
als auch quer dazu auf $P_{h2}$zul. gesteigert sind;

Fig. 7 einen Längsschnitt durch die schematische Darstellung einer Spannvorrichtung als Ausführungsbeispiel
der erfindungsgemäßen Vorrichtung;

Fig. 8 eine vereinfachte Draufsicht auf die Vorrichtung gemäß Fig. 7, wobei zur besseren Übersichtlichkeit
eine Vielzahl von Teilen weggelassen ist;

Fig. 9 eine schematische Schnittdarstellung längs der Linie
IX-IX in Fig. 7.

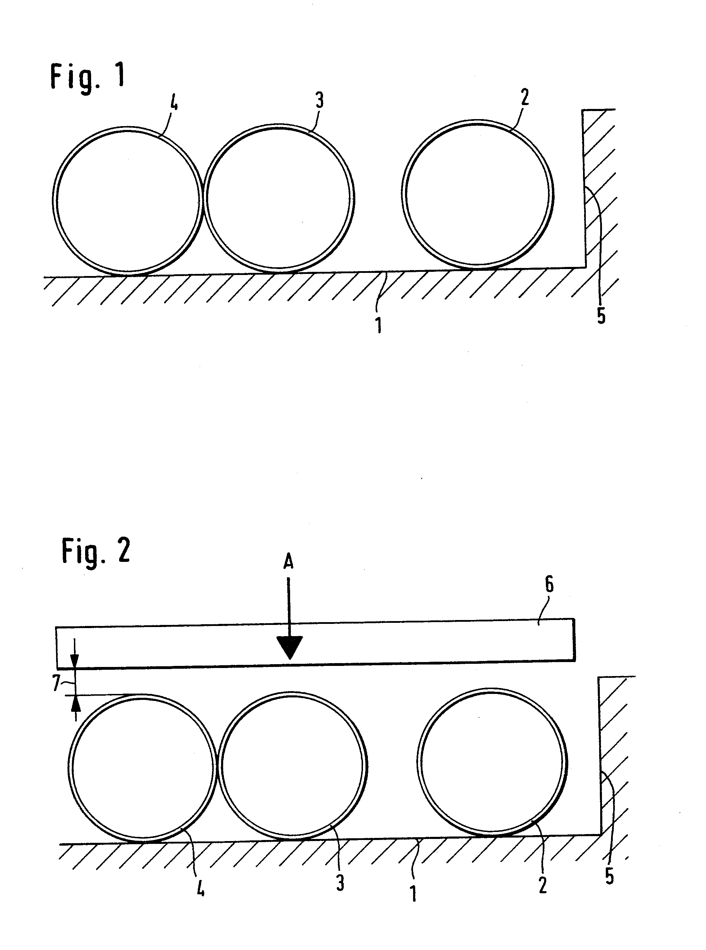

Auf einer Spannauflage 1 sind Rohre 2, 3 und 4 angeordnet,
die zwecks Abtrennen von Abschnitten von den Rohren mittels
einer Trenneinrichtung gespannt werden sollen. Die Spannauflage weist eine ortsfeste Spannbacke 5 auf. Die Verfahrensschritte bei dem erfindungsgemäßen Verfahren werden anhand
von Fig. 1 bis Fig. 6 wie folgt erläutert:

Zur Sicherung gegen ein Übereinanderschieben werden in Richtung A, also quer zur Richtung der Lagerebene 1, Kräfte von
lediglich solcher Größe auf die Rohre 2 bis 4 aufgebracht,
daß eine Sicherung gegen ein Übereinanderschieben bei in Rich-

tung der Lagerebene wirkenden Kräften erfolgt, jedoch ohne
Erhöhung bzw. merkbare Erhöhung der Auflagekräfte der Rohre
2 bis 4 auf die Spannauflage 1. Dies wird in Fig. 2 schematisch durch einen Spannbalken 6 angedeutet, durch den Niederhaltekräfte in Richtung A ausgeübt werden. Der Spannbalken 6
wird von oben her auf die Oberseite der Rohre 2 bis 4 gefahren, jedoch nur so, daß zwischen den Rohren und der Unterseite des Spannbalkens 6 ein Abstand 7 verbleibt.

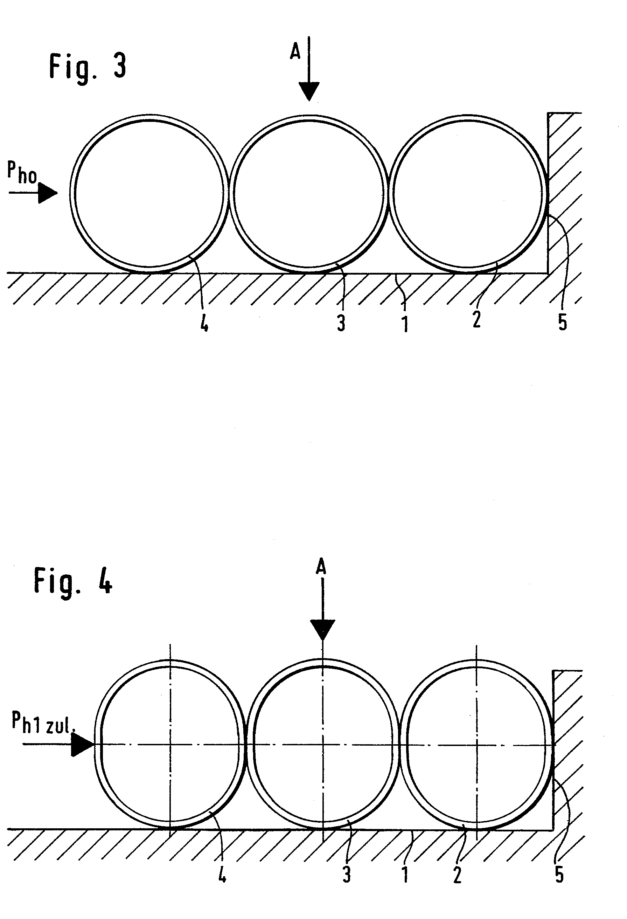

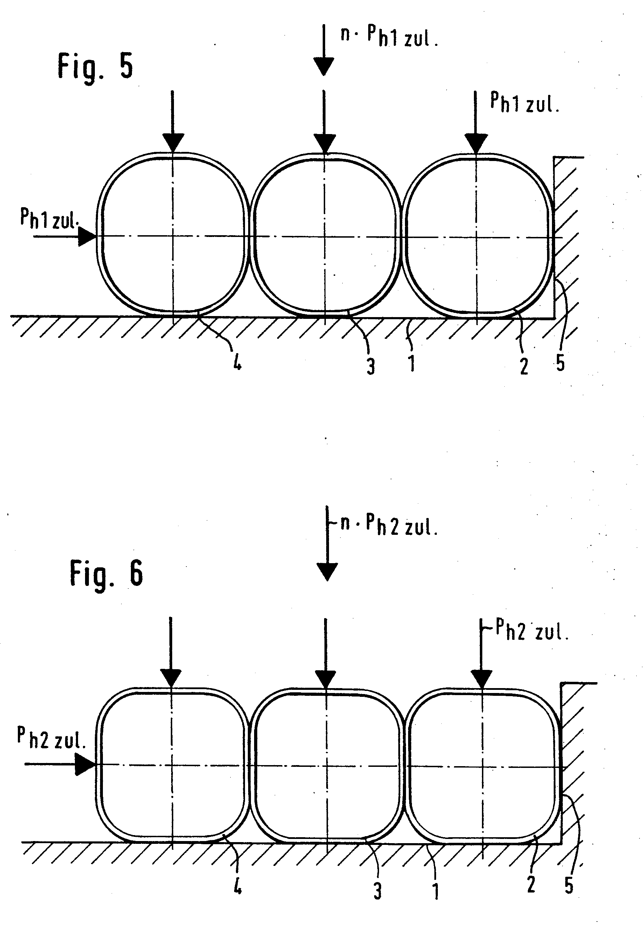

Anschließend werden unter Aufrechterhaltung der Sicherung
gegen ein Übereinanderschieben gemäß Fig. 3 und Fig. 4 Kräfte in Richtung der Lagerebene 1 aufgebracht. Dabei werden die
Rohre zunächst unter Überwindung der durch die Gewichtskräfte
auftretenden Reibung zusammengeschoben, bis sich die Rohre linienförmig berühren. Sodann wird die Kraft auf $P_{h_1}$zul. gesteigert, welche der Kraft entspricht, bei der die Rohre bei Einwirkung nur dieser Kräfte keine unzulässige bleibende Verformung erfahren. Infolge der Sicherung gegen ein Übereinanderschieben ohne Erhöhung bzw. merkbare Erhöhung der Auflagekräfte, wirken die Kräfte $P_{h_1}$zul. auf gegenüberliegenden Seiten
an allen eingespannten Rohren, und es tritt eine Verformung
im elastischen Bereich auf, derart, daß die Abmessungen der
Rohre in der Lagerebene kleiner und quer zur Lagerebene grösser werden. Anschließend werden dann auf jedes Rohr, wie aus
Fig. 5 ersichtlich, quer zur Richtung der Lagerebene, also
von oben her, Kräfte der Größe $P_{h_1}$zul. aufgebracht. Wenn
hierzu ein Spannbalken eingesetzt wird, so werden mittels
des Spannbalkens die Kräfte $n \cdot P_{h_1}$zul. aufgebracht, wobei
n die Anzahl der Rohre ist.

Wenn dieser Zustand erreicht ist, können die sowohl in Richtung der Lagerebene als auch quer dazu wirkenden Kräfte gesteigert werden, ohne daß eine bleibende Rohrverformung auftritt. Die Steigerung kann maximal in Richtung der Lagerebene auf $P_{h_2}$zul. erfolgen, und quer dazu pro Rohr ebenfalls
auf diesen Wert bzw. insgesamt bei Verwendung eines Spannbalkens auf $n \cdot P_{h_2}$zul.. Es handelt sich bei $P_{h_2}$zul. um die Kraft,
bei der die Rohre bei Einwirkung von gleichzeitig in der Lagerebene und quer dazu gegenüberliegend einwirkenden Kräften
keine unzulässige bleibende Verformung erfahren.

Nach Erreichung dieser Spannkräfte erfolgt dann ein Vergleich,
ob diese größer sind als die technologisch optimal erreichbaren Zerspankräfte einer (nicht dargestellten) Trenneinrichtung,
mittels derer parallel zur Zeichenebene der Figuren 1 bis 6
Abschnitte von den Rohren 2 bis 4 abgetrennt werden sollen.
Sind die Spannkräfte geringer, so werden die Zerspankräfte
der Trenneinrichtung beispielsweise durch Verringerung des
Vorschubes so verkleinert, daß diese geringer sind als die
Spannkräfte.

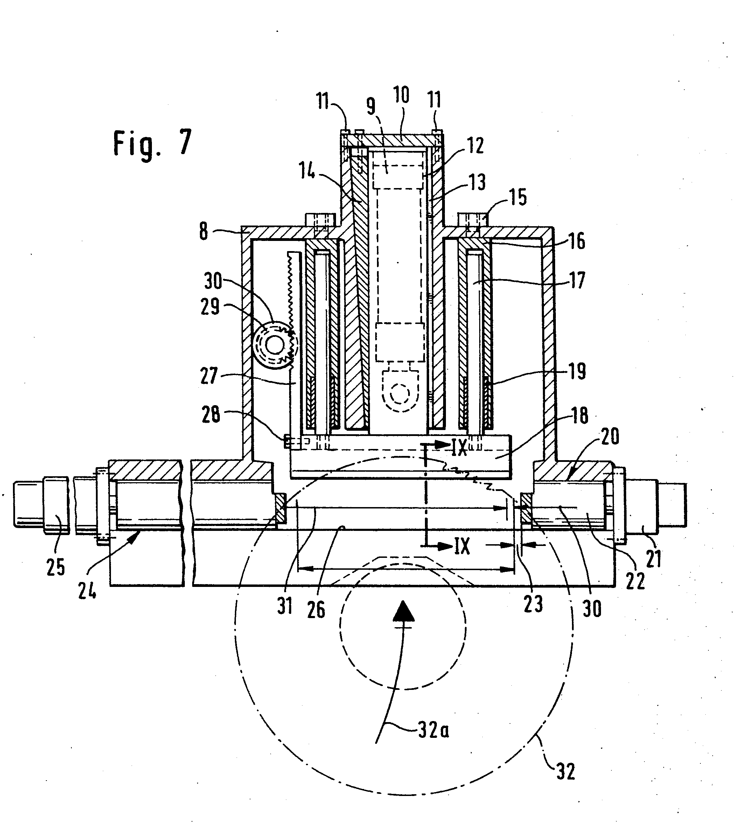

Gemäß Fig. 7 ist in einem Gehäuse 8 ein vertikaler Zylinder
9 mittels eines Gehäusedeckels 10 und Verschraubungen 11 befestigt. Ein als Hohlstange ausgebildeter Vertikalschieber 12
ist mittels Flachführungen 13 oder einer vergleichbaren Einrichtung vertikal geführt. Durch eine Keilleiste 14 oder eine
entsprechende andere Einrichtung läßt sich das Führungsspiel
des Vertikalschiebers 12 auf ein möglichst geringes Maß einstellen.

Mittels einer Befestigungsplatte 15 ist ein Klemmrohr 16
axial starr mit dem Gehäuse 8 verschraubt. In dem Klemmrohr
16 befindet sich eine Klemmstange 17, welche ihrerseits mit
einem vertikalen Spannbacken 18 starr verbunden ist. Der vertikale Spannbacken 18 ist wiederum starr mit dem vertikalen
Schieber 12 verbunden. In dem Klemmrohr 16 befindet sich
eine Klemmhülse 19, welche die Eigenschaft besitzt, bei Beaufschlagung mit Drucköl die Klemmstange 17 in an sich bekannter Weise einzuspannen und dadurch den vertikalen Spannbacken
18 und das Gehäuse 8 starr miteinander zu verbinden.

Eine Spanneinrichtung 20 ist mittels eines Zylinders 21 betätigbar. Der dazu gehörende Spannbacken 22 führt im vorliegenden Fall nur einen Lüfthub 23 in Richtung 30 aus. Eine
über den ganzen Spannhub verschiebbare horizontale Spanneinrichtung 24 wirkt mit Hilfe eines Zylinders 25 in Richtung
31.

Die Zylinder 21 und 25 sind dabei so gestaltet oder hydraulisch beaufschlagt, daß die Kraft des Zylinders 21 immer grösser ist als die Kraft des Zylinders 25.

Die Vorrichtung weist eine mit 26 bezeichnete Spannauflage für die Rohre auf, welche sowohl mit einem (hier nicht dargestellten) Maschinenuntersatz als auch mit dem Gehäuse 8 starr verbunden ist. Mit dem vertikalen Spannbacken 18 ist eine Zahnstange 27 mittels Schrauben 28 fest verbunden. In die Zahnstange 27 greift ein Zahnrad 29 ein, welches seinerseits mit einem Drehgeber 30 verbunden ist. Die vorgenannte Einrichtung bildet eine vertikale Meßeinrichtung.

Aus Symmetriegründen ist die Klemmeinrichtung 15, 16, 17 und 19 auf beiden Seiten des vertikalen Schiebers 12 vorgesehen, jedoch auf der entsprechend der zeichnerischen Darstellung links gelegenen Seite nicht gesondert bezeichnet.

Die Vorrichtung gemäß Fig. 7 stellt nur ein Ausführungsbeispiel dar. Es ist ohne weiteres möglich, einzelne Elemente durch andere Elemente zu ersetzen. So können anstelle der Flachführungen 13 Rollenführungen eingesetzt oder die Klemmeinrichtung 15, 16, 17 und 19 durch andere Klemmelemente ersetzt werden. Es ist auch möglich, anstelle eines Vertikalzylinders 9 zwei Zylinder anzuordnen, oder die Klemmeinrichtung 15, 16, 17 und 19 gleichachsig mit dem Zylinder 9 anzuordnen. Darüber hinaus ist es auch für die vorliegende Erfindung unerheblich, ob die in Richtung 31 wirkenden Spanneinrichtungen 20 und 24 einseitig oder symmetrisch bei dem Spannvorgang zugestellt werden.

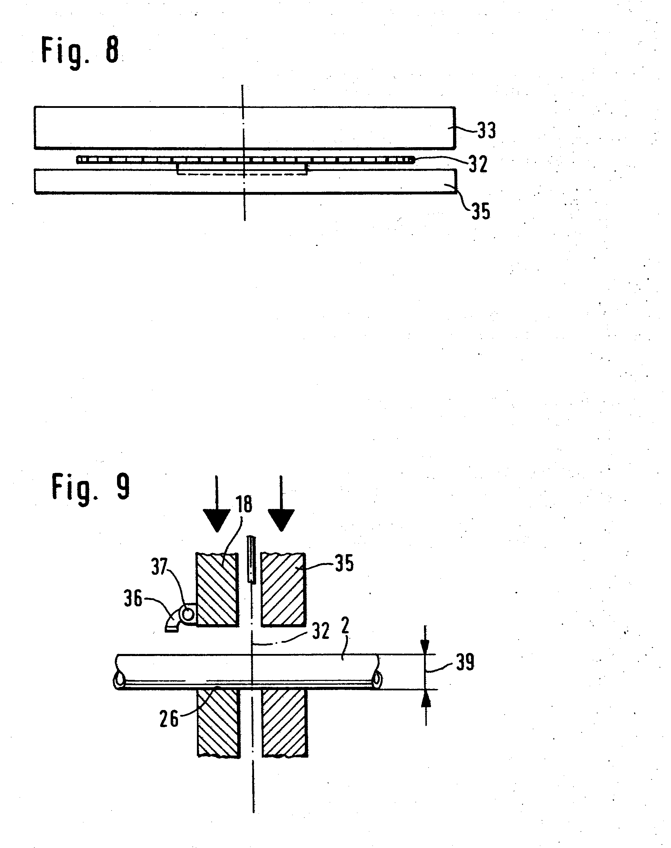

Fig. 8 zeigt eine Draufsicht auf Fig. 7 in stark vereinfachter Form. Ein Sägeblatt oder Trennwerkzeug 32 wird bei dem Säge- oder Trennvorgang entsprechend der zeichnerischen Darstellung von unten nach oben bzw. entsprechend der Pfeilrichtung 32a in Fig. 7 bewegt. Die anhand von Fig. 7 beschriebene Spanneinrichtung ist durch eine mit 33 bezeichnete Konturlinie dargestellt. Bei der gewählten Anordnung des Trennens, also von unten nach oben in Pfeilrichtung 32a, kann auch auf der
der Spannvorrichtung 33 gegenüberliegenden Seite des Sägeblattes 32 eine weitere komplette Spannvorrichtung vorgesehen sein, welche lediglich schematisch durch die Konturlinie
35 dargestellt ist.

Fig. 9 zeigt eine schematische Schnittdarstellung durch Fig.
8 mit einem auf der Spannauflage 26 aufliegenden Rohr 2. An
dem vertikalen Spannbalken 18 ist ein Fühler 36 angeordnet,
der bei Absenken eine Drehbewegung um seine Achse 37 ausführt und dabei in an sich bekannter Weise, beispielsweise
mittels eines (nicht dargestellten) Endschalters, meldet, daß
der Spannbalken 18 die Höhe des Durchmessers 39 des Rohres 2
erreicht hat. Die Wirkungsweise dieser Einrichtung erstreckt
sich über die gesamte Breite der Lage der Rohre.

Die Wirkungsweise der beschriebenen Spannvorrichtung ergibt
sich ohne weiteres aus dem Gesamtinhalt der Beschreibung.

0123899

Patentansprüche

1. Verfahren zum Spannen von einzeln oder in Lagen auf
einer Spannauflage aufliegenden Rohren od. dgl. zwecks
Abtrennen von Abschnitten mittels einer Trenneinrichtung, bei dem in Richtung der Lagerebene auf gegenüberliegenden Seiten Spannkräfte von maximal solcher Größe
($P_{h1}$zul.) aufgebracht werden, daß die Rohre bei Einwirkung nur dieser Kräfte keine unzulässige bleibende Verformung erfahren, und die Rohre durch quer zur Richtung
der Lagerebene auf gegenüberliegenden Seiten auf die
Rohre wirkende Niederhaltekräfte gegen ein Übereinanderschieben gesichert werden, dadurch gekennzeichnet, daß
während des Aufbringens oder vor dem Aufbringen der in
der Lagerebene wirkenden Spannkräfte von maximal der
Größe $P_{h1}$zul. quer zur Richtung der Lagerebene wirkende
Kräfte von lediglich solcher Größe aufgebracht werden,
daß die Sicherung gegen ein Übereinanderschieben ohne
Erhöhung bzw. merkbare Erhöhung der Auflagekräfte der
Rohre auf der Spannauflage erfolgt, und daß anschliessend quer zur Richtung der Lagerebene wirkende Spannkräfte von der Größe $P_{h1}$zul. pro Rohr bzw. n · $P_{h1}$zul.
auf die Rohre aufgebracht werden, wobei n die Anzahl
der Rohre in der Lage ist, und daß anschließend gleichzeitig die in Richtung der Lagerebene und die quer zur
Richtung der Lagerebene wirkenden Spannkräfte pro Rohr

auf höchstens $P_{h2}$zul. erhöht werden - somit in Richtung der Lagerebene auf $P_{h2}$zul. und quer zur Richtung der Lagerebene auf n · $P_{h2}$zul. - wobei $P_{h2}$zul. die Kraft ist, bei der die Rohre bei Einwirkung von gleichzeitig in der Lagerebene und quer zur Lagerebene gegenüberliegend einwirkenden Kräften keine unzulässige bleibende Verformung erfahren.

2. Vorrichtung zur Durchführung des Verfahrens nach Anspruch 1, mit einer oberhalb einer Spannauflage angeordneten horizontalen Spanneinrichtung und einem vertikal verschiebbaren, sich über die Breite der Lage erstreckenden Spannbalken, dadurch gekennzeichnet, daß die horizontale Spanneinrichtung (20, 24) und der vertikale Spannbalken (18) Meßeinrichtungen zur Messung der während des Spannvorganges entstehenden geometrischen Verformungen der Rohre aufweisen, und die Meßeinrichtungen bei Erreichung bzw. Überschreitung der zulässigen Verformungen ein das Ende des betreffenden Spannvorganges auslösendes Signal abgeben.

3. Vorrichtung nach Anspruch 2, dadurch gekennzeichnet, daß die Spanneinrichtungen Rücklaufsperreinrichtungen (16, 17, 19) aufweisen.

4. Vorrichtung nach Anspruch 2 oder 3, dadurch gekennzeichnet, daß in einer Spanneinrichtung mehrere Spannvorrichtungen (33, 35) vorgesehen sind.

5. Vorrichtung nach Anspruch 2, dadurch gekennzeichnet, daß dem Spannbalken (18) eine Kontakteinrichtung zugeordnet ist, durch deren Wirkung die Vorschubbewegung des Spannbalkens bei Erreichung bzw. Überschreitung eines bestimmten Wertes abstellbar ist.

6. Vorrichtung nach einem der Ansprüche 2 bis 5, dadurch gekennzeichnet, daß nach dem Abschalten einer Vorschubbewegung des Spannbalkens (18) die zugeordnete Meßein-

0123899

richtung bei Erreichung eines geringen Anpreßdruckes
des Spannbalkens auf die Rohre auf Null gesetzt bzw.
der dann vorhandene Meßwert in der Meßeinrichtung verrechenbar als Konstante gespeichert wird.

7. Vorrichtung nach einem der Ansprüche 2 bis 6, dadurch
gekennzeichnet, daß der Vorrichtung eine zur Messung
bzw. Aufnahme vorgegebener Daten der zu spannenden Rohre ausgebildete weitere Meß- und Recheneinrichtung zugeordnet ist.

8. Vorrichtung nach einem der Ansprüche 2 bis 7, dadurch
gekennzeichnet, daß eine Wegmeßeinrichtung zum Zwecke
der Ermittlung der Rohranzahl vorgesehen ist.

Fig. 1

Fig. 2

0123899

Fig. 3

A

$P_{ho}$

4    3    1    2    5

Fig. 4

A

$P_{h1\,zul.}$

4    3    1    2    5

Fig. 5

$n \cdot P_{h1\,zul.}$

$P_{h1\,zul.}$

$P_{h1\,zul.}$

4   3   1   2   5

Fig. 6

$n \cdot P_{h2\,zul.}$

$P_{h2\,zul.}$

$P_{h2\,zul.}$

4   3   1   2   5

Fig. 7

Fig. 8

33

32

35

Fig. 9

18

37

36

35

32  2

26

39

Europäisches
Patentamt

**EUROPÄISCHER RECHERCHENBERICHT**

0123899

Nummer der Anmeldung

EP 84 10 3350

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 725 284 (MANNESMANN AG) * Anspruch 1; Seiten 3-5; Figur * | 1 | B 23 D 47/04 |
| | --- | | |
| A | DE-A-1 652 782 (SCHLOEMANN AG) * Seiten 9, 11-13; Figuren 1, 2, 5 * | 1 | |
| | --- | | |
| A | GB-A- 719 592 (BUNDY TUBING CO.) * Figuren 3-8 * | 1 | |
| | --- | | |
| A | DE-A-3 110 548 (MANNESMANN AG) * Anspruch 1; Seite 6, Zeilen 10-13; Figur 1 * | 1 | |
| | --- | | |
| A | US-A-3 877 690 (OWENS) * Figuren 1-3 * | 4 | RECHERCHIERTE SACHGEBIETE (Int. Cl. ³) |
| | --- | | B 23 D 45/04 |
| A | MACHINERY AND PRODUCTION ENGINEERING, Band 141, Nr. 3619, 19. Januar 1983, Burgess Hill (GB) "Bandsaws with keyboard data setting", Seite 49 | 7 | B 23 D 47/04 B 23 D 51/04 B 23 D 55/04 B 23 Q 3/00 B 25 B 1/20 |
| | ----- | | |

Der vorliegende Recherchenbericht wurde für alle Patentansprüche erstellt.

| Recherchenort BERLIN | Abschlußdatum der Recherche 29-06-1984 | Prüfer MARTIN A E W |
|---|---|---|